# EUROPÄISCHE PATENTANMELDUNG

(11) **EP 1 006 725 A2**
(43) Veröffentlichungstag der Anmeldung: **07.06.2000**
(21) Anmeldenummer: 99113368.7
(22) Anmeldetag: 10.07.1999
(51) Int. Cl.: H04N 7/173

(54) **Multimedia-Abonnentensystem**

(30) Priorität: 03.12.1998 DE 19855650
(71) Anmelder: Galaxis Vertriebsgesellschaft mbH, 23556 Lübeck (DE)
(72) Erfinder: Klimek, Winfried M., 23611 Bad Schwartau (DE); Fischer, Frank, 23562 Lübeck (DE); Kreuels, Thomas, 23570 Travemünde (DE)
(74) Vertreter: Lenzing, Andreas, Dr.

(57) **Zusammenfassung**

Die Erfindung betrifft ein Multimedia-Abonnentensystem, bei dem ein Dienstanbieter mehrere Abonnenten mit Multimedia-Daten versorgt, und bei den Abonnenten jeweils eine mindestens ein Speichermedium umfassende Einrichtung angeordnet ist, wobei der Dienstanbieter kontinuierlich oder in vorbestimmbaren Zeitintervallen neue Multimedia-Daten zu den Einrichtungen der Abonnenten überträgt, wobei die neu zu speichernden Multimedia-Daten die vorher auf dem Speichermedium gespeicherten Daten zumindest teilweise ersetzen.

## Beschreibung

Die Erfindung betrifft ein Multimedia-Abonnentensystem gemäß des Oberbegriffs des Anspruchs 1.

Ein gattungsgemäßes Abonnentensystem ist aus der US 5,619,247 bekannt. Bei diesem System ist bei jedem Abonnent vor Ort ein größerer Speicher, welcher mit einer Kabelbox oder einem Tuner, welche wiederum mit dem Kabelanschluß in Verbindung sind, sowie mit einem Controller, welcher die Aufnahme und das Abspielen der auf dem Massenspeicher gespeicherten Daten steuert und welcher wiederum über einen Kommunikationskanal mit einem Dienstanbieter in Verbindung ist. An die Kabelbox ist ein Videorecorder oder ein Fernsehgerät anschließbar.

Der Abonnent kann bestimmte Programme vorab auswählen wonach dann die entsprechenden Daten vom Provider über das Kabel zur Verfügung gestellt werden und auf dem Speichermedium abgespeichert werden. Für das Abspeichern bzw. dem Downloaden muß der Abonnent keine Gebühren entrichten. Der Abonnent zahlt lediglich dann ein Entgelt, wenn er bestimmte abgespeicherte Daten ansieht oder anderweitig verarbeitet. Bei diesem System ist es dem Abonnenten überlassen, genügend Speicherplatz auf dem Speichermedium für die herunterzuladenen Daten bereitzustellen, indem er bereits gespeicherte Daten vor dem Anfordern neuer Daten eigenhändig löschen muß, bzw. diese Daten in einer nicht beschriebenen Art und Weise zum Löschen freigeben muß. Diese Vorgehensweise erfordert einen erheblichen zeitlichen Aufwand für den Abonnenten.

Aufgabe der vorliegenden Erfindung ist es, ein Multimedia-Abonnentensystem bereitzustellen, bei dem sich der Abonnent keine Gedanken über den noch zur Verfügung stehenden Speicherplatz machen muß.

Diese Aufgabe wird erfinderisch dadurch gelöst, daß der Dienstanbieter kontinuierlich oder in vorbestimmbaren Zeitintervallen neue Multimediadaten gleichzeitig zu den Einrichtungen aller Abonnenten überträgt, wobei die Einrichtungen die vorher auf dem Speichermedium gespeicherten Daten durch die neuen Multimedia-Daten zumindest teilweise ersetzt.

Das erfindungsgemäße Abonnentensystem hat den Vorteil, daß nunmehr bei jedem Abonnenten eine Einrichtung vorhanden ist, die das Abspeichern der neu ankommenden Daten überwacht und bei Bedarf selbsttätig alte Daten überschreibt bzw. löscht. Das Löschen oder partielle Überschreiben von alten Daten geschieht entweder nur dann, wenn für die neu ankommenden Daten nicht genügend Speicherplatz auf dem Speichermedium vorhanden ist oder aber auf Befehl des Diensteanbieters.

Bei einer besonders vorteilhaften Ausführungsform stellt der Dienstanbieter z.B. monatlich oder wöchentlich bestimmte Spielfilme den Abonnenten zur Verfügung. Dabei überträgt der Dienstanbieter einen Film nach dem anderen auf das Speichermedium sämtlicher Abonnenten. Es ist jedoch auch möglich alle Filme gleichzeitig mittels eines Multiplexverfahrens zu übertragen. Hierbei werden die in der Woche, dem Monat oder einem beliebigen insbesondere auch flexibel gestaltbarem Zeitintervall zuvor bereits dem Abonnenten zur Verfügung gestellten Spielfilme direkt überspielt, so daß nach Ende der Übertragung der Abonnent eine neue Auswahl von Spielfilmen auf seinem Speichermedium direkt und zum sofortigen Abrufen vor Ort gespeichert hat.

In einer weiteren vorteilhaften Ausgestaltung dieses Systems kann der Platz auf dem Speichermedium z.B. in zwei insbesondere etwa gleich große Speicherbereiche aufgeteilt sein, wobei die beiden Bereiche abwechselnd mit den Multimedia-Daten des neuen Zyklus aufgefüllt werden, wobei in dem anderen Speicherbereich die Daten des letzten Abonnentenzyklus gespeichert bleiben. Hierdurch wird gewährleistet, daß während der Übertragung der neuen Multimedia-Daten der Abonnent noch auf sämtliche Daten des vorherigen Zyklus zugreifen kann und somit keine Zeitfenster entstehen, in denen der Abonnent keine Multimedia-Daten wie z.B. TV-Filme abrufen kann.

Es ist möglich, mit bestimmten Steuerkommandos, welche der Dienstanbieter über das Übertragungsmedium an die Einrichtungen der Abonnenten sendet, die Einrichtungen dahingehend zu programmieren, daß sofern ein Spielfilm oder Musiktitel vollständig übertragen wurde, direkt auf diesen zugegriffen werden kann. Sofern die Daten vom Diensteanbieter an die Abonnenten in Echt-Zeit übertragen werden, kann es dem Abonnenten auch ermöglicht oder gestattet sein, die Daten während der Übertragung abzurufen bzw. wiederzugeben.

In einer weiteren ebenfalls vorteilhaften Ausgestaltung des System kann der einzelne Abonnent aktiv bestimmte Datendienste wie z.B. Filme, Software, Informationen etc. oder Präferenzen für z.B. Filmarten wie z.B. Western, Krimis oder Komödien auszuwählen, wonach dann aus dem vom Dienstanbieter für den neuen Zyklus übertragenen Multimedia-Daten bzw. Datendiensten die entsprechenden Spielfilme, Musiktitel und/oder auch Softwareprogramme von der Einrichtung des Abonnenten auf dem Speichermedium selektiv gespeichert werden. Hierdurch ist es möglich, daß Programmangebot an verschiedenen Multimedia-Daten von der Dienstanbieterseite aus sehr groß zu gestalten, wobei gleichzeitig die bei den Abonnenten installierten Speichermedien nicht unnötig groß, d.h. für sämtliche zur Verfügung gestellten Daten während eines Abonnentenzyklus dimensioniert sein müssen.

Die einzelnen Multimedia-Daten können vom Dienstanbieter codiert und/oder komprimiert zu den Abonnenten übertragen werden, wo sie dann entweder entschlüsselt oder verschlüsselt und/oder komprimiert oder dekomprimiert auf dem Speichermedium abgelegt werden. Damit der Abonnent nicht unbefugt und ohne Bezahlung des entsprechenden Entgeltes an die Multimedia-Daten auf dem Speichermedium gelangt, sollten jedoch vorteilhaft die Daten verschlüsselt und insbesondere komprimiert gespeichert werden.

Damit die Daten auch vollständig und richtig auf dem Speichermedium abgelegt werden, ist es von Vorteil, die Multimedia-Daten eines Abonnentenzyklus mindestens zweimal hintereinander zu übertragen, damit bei einer uni-direktionalen Übertragungsstrecke eine Fehlerkorrektur möglich ist. Sofern ein bi-direktionales Übertragungsmedium wie z.B. das Internet zur Übertragung der Multimedia-Daten vom Dienstanbieter zu den Abonnenten verwendet wird, können herkömmliche Fehlerkorrekturverfahren eingesetzt werden, wobei dann die einzelnen Einrichtungen direkt bei einer fehlerhaften Übertragung die entsprechenden Daten, welche insbesondere in Paketen übersandt werden erneut anfordern können.

Bei einer weiteren vorteilhaften Ausgestaltung des erfindungsgemäßen Abonnentensystem sind unterschiedliche Kategorien von Abonnenten vorgesehen, so daß z.B. verschiedene Tarife vom Dienstanbieter angeboten werden, wobei sich die Programmangebote der unterschiedlichen Tarife voneinander unterscheiden.

Es ist in jedem Fall von Vorteil, wenn bei den vorgenannten Systemen der Dienstanbieter über das verwendete Übertragungsmedium die Einrichtungen der einzelnen Abonnenten, wobei hierbei jeder Abonnent bzw. dessen Einrichtung eine Identifizierungsnummer besitzt, individuell programmieren kann. Somit ist z.B. der Tarif in der Einrichtung eines Abonnenten von dem Dienstanbieter bei der Einrichtung des Abonnenten über das Übertragungsmedium neu einzustellen, so daß die Einrichtung fortan die Daten des neuen Tarifs abspeichern kann. Die Einrichtung erkennt in diesem Fall die mit Kennung versehenen Multimedia-Daten und wird, sofern die Multimedia-Daten zu dem vom Abonnenten bestellten Tarif gehören, diese auf dem Speichermedium abspeichern, sofern nicht vorher der Abonnent über eine Vorauswahl das Speichern der betreffenden Multimedia-Daten ausgeschlossen hat.

In einer besonderen Ausführungsform der Erfindung ist es dem Abonnenten nicht möglich eine Vorauswahl von bestimmten Multimedia-Daten bzw. Arten von Multimedia-Daten vorzunehmen. In diesem Fall werden sämtliche Daten eines Abonnentenzyklus jeweils durch die neuen Daten des neuen Abonnentenzyklus vollständig ersetzt.

Zusätzlich zu den Tarifgruppenkennungen, sofern diese überhaupt verwendet werden, können die Multimedia-Daten mit weiteren Kennungen versehen sein. So ist es z.B. möglich, jedem TV-Spielfilm vorab ein Datenpaket voranzustellen, in dem das Entgelt, die Art und/oder weitere Spielfilmbezogene Daten wie z.B. die Länge des Spielfilmes bzw. die Größe des zu übertragenen Spielfilmes in Kilo- bzw. Megabyte abgelegt sind.

Der Abonnent hat ferner die Möglichkeit, sich die auf dem Speichermedium abgespeicherten Multimedia-Daten, welche auch 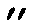 Events" genannt werden können, mittels einer Übersicht, z.B. in Form eines Inhaltsverzeichnisses, welches auf dem angeschlossenen TV-Gerät. Einem angeschlossenen Computer oder einem zusätzlichen Display darstellbar ist, zu betrachten. Diese Übersicht ermöglicht es dem Abonnenten direkt bestimmte Multimedia-Daten mittels geeigneter Eingabemedien wie z.B. einer Tastatur, eines Touch Screens oder herkömmlicher Fernbedienung anzuwählen und sich z.B. einen kurzen Ausschnitt gebührenfrei vorspielen lassen. Erst wenn der Abonnent den entsprechenden TV-Film oder den Musiktitel zum Abspielen endgültig aufgerufen hat, muß er das entsprechende Entgelt an den Dienstanbieter bzw. Provider entrichten. Die Darstellung des Speicherinhalts des Speichermediums kann auch dahingehend ergänzt werden, daß die gespeicherten Multimedia-Daten mit wählbaren Detaillierungsgrad beschrieben werden. Hierbei ist es z.B. denkbar, daß mit den Multimediadaten wie z.B. Audio/Videodaten zusätzlich ein kurzer Text übertragen wird, welcher kostenfrei dem Benutzer angezeigt wird.

Zusätzlich sollte der Abonnent in der Lage sein, zu erkennen, wann der nächste Übertragungszyklus beginnt und welche Multimedia-Daten im nächsten Zyklus vom Dienstanbieter zur Verfügung gestellt werden. Hierdurch hat der Abonnent die Möglichkeit, sofern das System automatisch die alten Multimedia-Daten des letzten Zyklus überspielt, noch rechtzeitig bestimmte Multimedia-Daten auf einen z.B. extern angeschlossenen Speicher wie z.B. einen Videorecorder gegen ein Entgelt zu übertragen. Denkbar ist aber auch, daß ein Speicherbereich des Speichermediums speziell für derartige Multimedia-Daten, welche über den aktuellen Zyklus hinaus abrufbar sein sollen zur Verfügung steht. Es ist jedoch auch möglich, daß der Abonnent die gespeicherten Multimedia-Daten selektiv markiert, so daß sie z.B. bei der Übertragung der Multimedia-Daten des nächsten Abonnentenzyklus nicht überschrieben bzw. gelöscht werden. Der Abonnent muß auch in diesem Fall nur dann für die über den Zyklus hinaus gespeicherten Multimedia-Daten das Entgelt nur dann entrichten, wenn er auch tatsächlich sich den TV-Film für eine Mindestzeit betrachtet.

Es ist selbstverständlich möglich, daß der Abonnent mehrfach auf bestimmte Multimedia-Daten innerhalb eines Abonnentenzyklus zugreifen kann. Hierbei können unterschiedliche Entgelte für ein und dieselben Multimedia-Daten fällig werden. So ist z.B. denkbar, daß für das erste Betrachten des Spielfilmes 100% des Entgeltes und für jedes weitere Betrachten lediglich 50% des Entgeltes entrichtet werden muß.

Das erfindungsgemäße Multimedia-Abonnentensystem ermöglicht das Abspielen von Audio-Video-Material entsprechend der üblichen Videorekorderfunktionen zu steuern. Falls die Abspielung des Films über eine längere Zeit (einige Stunden bis Tage) unterbrochen wird, besteht die Möglichkeit den Film an der zuletzt dargestellten Stelle wieder zu starten. Hierzu werden entsprechende Index-Markierungen von der Einrichtung automatisch gesetzt und abgespeichert.

Von der Einrichtung kann das Nutzen der Einrichtung und den gespeicherten Daten durch den Abonnenten protokolliert werden, wobei das Protokoll zu zur Überprüfung der Abbrechnung herangezogen werden kann. Es kann auch direkt für die in Intervallen vorzunehmenden Abbrechnung dienen. Dieses Protokoll kann stets oder auch nur auf Befehl des Diensteanbieters von der Einrichtung an die Datenverarbeitungsanlage des Diensteanbieters übermittelt werden. Anhand der einzelnen Protokolle kann der Diensteanbieter das Abonnentenverhalten studieren und sein Dienste-Angebot entsprechend abstimmen. Ein derartiges Protokoll ist jedoch für die Durchführung des erfindungsgemäßen Systems nicht zwingend notwendig.

Um das Kopieren der Filme auf einen Videorecorder bzw. ein weiteres Speichermedium gegen eine Gebühr zu ermöglichen, ist der auf einem TV darzustellende Inhalt beim Abspielen des Films so geschützt, daß eine einwandfreie Darstellung auf dem Fernseher, jedoch keine Aufnahme mit einem Videorecorder möglich ist. Das Scramblingsystem kann wahlweise aktiviert bzw. deaktiviert werden.

Bei dem erfindungsgemäßen Multimedia-Abonnentensystem verfügt jede Einrichtung über ein Nutzungsfassungs-, Gebührenerhebungs- und Abrechnungssystem, das die Erkennung und Abrechnung von Abspielungen der einzelnen Speicherinhalte wie z.B. TV-Filme ermöglicht. Dazu erfaßt und eventuell speichert das System, welche Daten wie oft abgerufen wurden und überträgt diese Information zu bestimmten Zeiten über eine verfügbare Telekommunikationsinfrastruktur (z.B. Telefonnetz) an ein zentralen Rechner. Somit ist auch eine korrekte Abrechnung mit den Originären Rechteinhabern auf eine Pay-Per-View-Basis gewährleistet.

Dabei kann die Gebührenzuordnung über den dem Dienstanbieter bekannten Abonnenten des Empfangsgerätes oder über den Besitzer einer speziellen Chipkarte erfolgen. Diese Chipkarte wird in das Gerät eingeschoben um den Abrechnungspartner bzw. den Abonnenten zu identifizieren bzw. für den Zugriff auf bestimmte Daten zu autorisieren. Diese Karten können z.B. so programmiert werden, daß sich nur bestimmte Inhalte der gespeicherten Multimedia-Daten anzeigen und auch abspielen lassen.

Die Bezahlung der genutzten Dienste kann z.B. mittels der Pre-Paid-Variante, bei der der Abonnent im Voraus eine bestimmte Summe an den Diensteanbieter entrichtet, durchgeführt werden. Der Abonnent erhält im Gegenzug eine Karte vom Anbieter auf der der entsprechende Betrag abgespeichert ist. Durch das Nutzen der Dienste verringert sich nach und nach der auf der Karte gespeicherte Betrag. Die Karte kann auch eine wiederaufladbare Karte sein, welche z.B. im normalen Geldverkehr heute üblicherweise Verwendung findet. Bei dieser Art der Bezahlung ist vorteilhaft kein Rückkanal, d.h. kein Datentransport vom Abonnenten hin zum Diensteanbieter notwendig.

Es ist zudem möglich, die Bezahlung über die Kredit-Karte des Abonnenten oder per Überweisung durchzuführen. Der Diensteanbieter kann in diesem Fall mittels entsprechenden Steuersignalen die Freischaltung in der Einrichtung des Abonnenten vornehmen.

Wird die Bezahlung mittels einer Karte durchgeführt, so können z.B. Karten an Minderjährige ausgegeben werden, die diese nicht dazu berechtigen auf Jugend gefährdende Inhalte zuzugreifen.

Es ist zudem möglich alle Bezahlungsmethoden für das System vorzusehen, wodurch der Abonnent sich die für ihn am begeumsten durchzuführende Variante aussuchen kann. Acuh ist eine Kombination aus den verschiedenen Bezahlungsmethoden denkbar.

In einer weiteren vorteilhaften Ausgestaltung verfügt jede Einrichtung über eine Kommunikationseinrichtung, mittels der die Nutzungsinformationen über eine bereits verfügbare Telekommunikationsinfrastruktur (z.B. Telefonnetz) an einen zentralen Rechner des Dienstanbieter übersandt werden. Hierzu verfügt die Einrichtung über eine oder mehrere entsprechende Schnittstellen an die diverse Übertragungsgeräte unterschiedlichster Art angeschlossen werden können (POT, ISDN, DECT, ADSL, irDA, RJ11, etc.).

Das System bietet weiterhin die Möglichkeit, z.B. Multimediainhalte über eine begrenzte Zeit ohne Nutzungserfassung/Gebührenerhebung zu konsumieren (Preview-Funktion).

Das System bietet zudem die Möglichkeit, daß der Systembetreiber/Dienstanbieter/Provider den kostenlosen jedoch erfaßten Zugriff auf speziell gespeicherte Daten unter gewissen Bedingungen ermöglicht, so daß z.B. Werbesendungen kostenlos und für jeden Abonnenten darstellbar sind und insbesondere der Dienstanbieter Rückmeldung darüber erhält, ob die entsprechenden Inhalte von den Abonnenten konsumiert worden sind. Es ist jedoch auch möglich, die Einrichtung derart zu programmieren, daß vor dem Abspielen von TV-Filmen derartige Werbesendungen automatisch dem Abonnenten gezeigt werden.

Wie das Abonnentensystem gemäß der US 5,619,247 können die Multimedia-Daten in digitaler Form per Satellit bzw. terrestrischer drahtgebundener oder drahtloser Telekommunikationsinfrastruktur auf die Empfangsgeräte der Abonnenten übertragen werden. Als Speichermedien empfehlen sich jegliche optische oder magnetische oder magnetisch-optische Aufzeichnungsverfahren oder auch die Speicherung in Speicherbausteinen. Bei der Verwendung von Speicherbausteinen sollte darauf geachtet werden, daß bei einem Ausfall der Versorgungsspannung die gespeicherten Daten nicht verloren gehen. Hier bieten sich sogenannte nicht-flüchtige Speicher an.

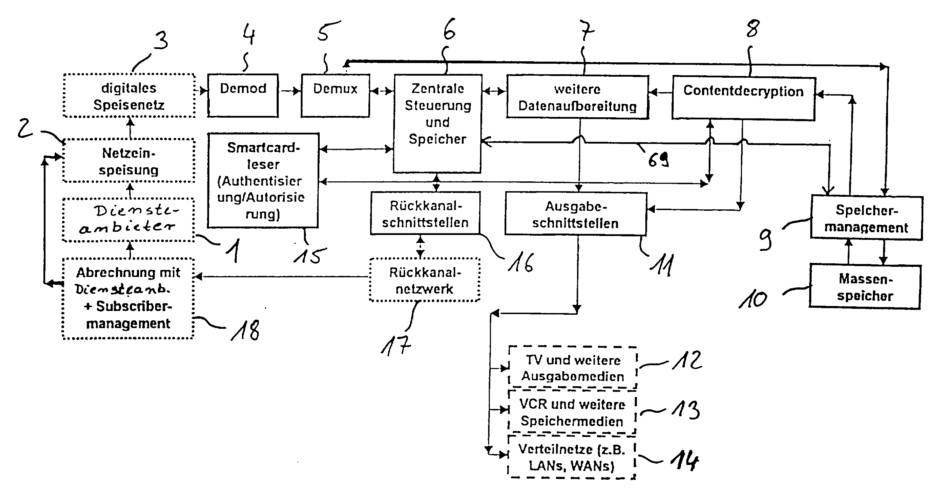

Nachfolgend wird eine erfindungsgemäße Ausführungsform eines Multimedia-Abonnentensystems anhand der Zeichnung näher erläutert.

Ein Dienstanbieter 1 ist über eine Netzeinspeisungseinrichtung 2 an ein digitales Speisenetz 3 angeschlossen, welches z.B. ein herkömmliches Breitbandkabelsystem ist. Jeder Abonnent verfügt über eine Einrichtung, welche über eine Demodulations- und Demultiplexvorrichtung 4, 5 zum Empfang der Daten aus dem digitalen Speisenetz 3 verfügt. Die Einrichtung hat eine zentrale Steuerung und einen Speicher 6, in dem die die Einrichtung steuernden Programme abgelegt sind und welche von der zentralen Steuerung ausgeführt werden. Die Steuerung kann jedoch auch über den Provider direkt oder z.B. über einen Personal Computer, eine Set-Top-Box oder ähnliche Einrichtungen erfolgen. Zusätzlich verfügt die Einrichtung über weitere Datenaufbereitungsmodule 7, welche für die jeweiligen Ausgabeschnittstellen 11 die Daten entsprechend aufbereiten. Da die Multimedia-Daten über das digitale Speisenetz 3 verschlüsselt übertragen werden können, verfügt die Einrichtung ebenfalls über eine content Dekryptioneinheit 8 mit deren Hilfe die verschlüsselten Daten entschlüsselt werden. Der Massenspeicher 10 ist an ein Speichermanagement 9 angeschlossen, welches z.B. ein Festplattencontroller sein kann. Das Speichermanagement 9 ist wiederum über einen entsprechenden Datenbus 69 mit der zentralen Steuerung 6 in Verbindung, wobei die zentrale Steuerung 6 je nach dem gerade abzuarbeitenden Programm entweder die über das digitale Speisenetz 3 empfangenen Daten mittels des Speichermanagements 9 auf den Massenspeicher 10 ablegt oder aber z.B. die verschlüsselten Daten vom Massenspeicher 10 über das Speichermanagement 9 und bedarfsweise über die content Dekryptioneinheit 8 ausliest und aufbereitet und über die Datenaufbereitungseinrichtung 7 sowie die Ausgabeschnittstellen 11 an ein TV-Gerät oder anderes Ausgabemedium 12, einen Videorecorder oder ein weiteres Speichermedium 13 oder ein weiteres Verteilnetzwerk, z.B. ein Computernetzwerk (LAN, WAN) weiterleitet. Die Einrichtung verfügt ebenfalls über eine Rückkanalschnittstelle 16, welche mit der zentralen Steuerung 6 und einem Rückkanalnetzwerk 17 in Verbindung ist. An das Rückkanalnetzwerk 17 ist eine Abrechnungseinheit auf der Seite des Dienstanbieters verbunden, wodurch die Abrechnung der abzubuchenden Entgelte für das Betrachten, Weiterverarbeiten und Benutzen der Multimedia-Daten erfolgt. Die Abrechnungseinheit 18 des Dienstanbieters verfügt ebenfalls über ein Subscriber-Management. Die Einrichtung verfügt wahlweise über einen Smartcardleser 15 zur Authentisierung und Autorisierung des Abonnenten bzw. Benutzers. Ebenso verfügt die Einrichtung über Eingangsschnittstellen, welche in der Zeichnung nicht dargestellt sind. Über die Eingangsschnittstellen sind z.B. Tastatur oder sonstige Eingabemedien oder auch Infrarotempfangseinrichtungen anschließbar, so daß der Abonnent mit der Einrichtung kommunizieren kann und die Einrichtung entsprechend seinen Wünschen steuerbar ist.

Die Einrichtung verfügt in nicht dargestellten Ausführungsformen über entsprechende Mittel, die z.B. andere Abrechnungsmethoden wie z.B. Pre-Paid oder Remote-Freischaltung ermöglichen.

## Patentansprüche

1. Multimedia-Abonnentensystem, bei dem ein oder mehrere Dienstanbieter mehrere Abonnenten mit Multimedia-Daten versorgt, und bei den Abonnenten jeweils eine mindestens ein Speichermedium umfassende Einrichtung angeordnet ist, **dadurch gekennzeichnet,** daß der oder die Dienstanbieter kontinuierlich oder in vorbestimmbaren Zeitintervallen neue Multimedia-Daten zu den Einrichtungen der Abonnenten überträgt, wobei die Einrichtung die vorher auf dem Speichermedium gespeicherten Daten mit den neu empfangenen Multimedia-Daten zumindest teilweise ersetzt und/oder auf andere Speichermedien und/oder in andere Speicherbereiche verschiebt.

2. Multimedia-Abonnentensystem nach Anspruch 1, **dadurch gekennzeichnet,** daß die neu zu speichernden Multimedia-Daten nur dann die alten Multimedia-Daten zumindest teilweise ersetzen, wenn die Kapazität des Speichermediums für die neuen und alten Multimedia-Daten zusammen nicht ausreicht.

3. Multimedia-Abonnentensystem nach Anspruch 1 oder 2, **dadurch gekennzeichnet,** daß die Einrichtung zusätzlich eine Vorrichtung umfaßt, die einen durch die neu zu speichernden Multimedia-Daten bedingten Speichermangel auf dem Speichermedium erkennt, und für die neu zu übertragenden Multimedia-Daten auf dem Speichermedium genügend Speicherplatz zur Verfügung stellt, in dem sie bereits auf dem Speichermedium gespeicherte Daten vor dem Speichern der neuen Daten zumindest teilweise löscht oder die alten Daten beim Speichern der neuen Daten überschreibt.

4. Multimedia-Abonnentensystem nach Anspruch 1 oder 2, **dadurch gekennzeichnet,** daß die bereits auf dem Speichermedium gespeicherten alten Multimedia-Daten durch die neu übertragenen Multimedia-Daten vollständig ersetzt werden.

5. Multimedia-Abonnentensystem nach einem der vorherigen Ansprüche, **dadurch gekennzeichnet,** daß ein Controller das Speichermedium verwaltet und der Controller insbesondere die Vorrichtung ist.

6. Multimedia-Abonnentensystem nach Anspruch 5, **dadurch gekennzeichnet,** daß der Controller von dem Dienstanbieter über das Übertragungsmedium mittels Steuerbefehlen steuer- und/oder programmierbar ist.

7. Multimedia-Abonnentensystem nach Anspruch 5 oder 6, **dadurch gekennzeichnet**, daß der Controller zusammen mit der Empfangselektronik von Kabelempfangsboxen oder Satellitenempfangsanlagen in einem Gehäuse angeordnet ist.

8. Multimedia-Abonnentensystem nach einem der vorherigen Ansprüche, **dadurch gekennzeichnet,** daß die Mulitmedia-Daten verschlüsselt übertragen und/oder auf dem Speichermedium verschlüsselt gespeichert werden.

9. Multimedia-Abonnentensystem nach einem der vorherigen Ansprüche, **dadurch gekennzeichnet,** daß der Dienstanbieter die zu übertragenden Multimedia-Daten auswählt und diese gleichzeitig an alle oder Gruppen von Abonnenten überträgt.

10. Multimedia-Abonnentensystem nach einem der vorherigen Ansprüche, **dadurch gekennzeichnet,** daß die Multimedia-Daten zur Verbesserung der Empfangssicherheit mehrfach und/oder unter Verwendung von Fehlerkorrekturverfahren übertragen werden.

11. Multimedia-Abonnentensystem nach einem der vorherigen Ansprüche, **dadurch gekennzeichnet,** daß das Speichermedium über ein Verzeichnissystem verfügt.

12. Multimedia-Abonnentensystem nach Anspruch 11, **dadurch gekennzeichnet,** daß mittels des Verzeichnissystems das Speichermedium in Partitionen aufteilbar ist, wobei jede Partition einer oder mehrerer Personen zuordbar ist.

13. Multimedia-Abonnentensystem nach einem der vorherigen Ansprüche, **dadurch gekennzeichnet,** daß die Multimedia-Daten Filme, Musiktitel, Softwareprogramme, Texte oder sonstige in binärer Form gespeicherte Daten sind.

14. Multimedia-Abonnentensystem nach einem der vorherigen Ansprüche, **dadurch gekennzeichnet,** daß bestimmte Arten von Multimedia-Daten und/oder bestimmte Inhalte von bestimmten Arten von Multimedia-Daten in bestimmten Bereichen oder Partitionen des Speichermediums gespeichert und bei Bedarf durch neuere Daten ersetzt und/oder ergänzt werden.

15. Multimedia-Abonnentensystem nach einem der vorherigen Ansprüche, **dadurch gekennzeichnet,** daß jeder Abonnent vom Dienstanbieter bestimmte Nutzerrechte zugeteilt bekommt und der Abonnent in Abhängigkeit seines Zugriffsrechtes Zugriff auf nur bestimmte Multimedia-Daten hat.

16. Multimedia-Abonnentensystem nach einem der vorherigen Ansprüche, **dadurch gekennzeichnet,** daß der Abonnent nur für ein vom Dienstanbieter bestimmbares Zeitintervall, welches durch eine Start- und eine Endzeit definierbar ist, oder zu bestimmten Zeiten Zugriff auf bestimmte bereits auf dem Speichermedium gespeicherte Daten hat.

17. Multimedia-Abonnentensystem nach einem der vorherigen Ansprüche, **dadurch gekennzeichnet,** daß der Abonnent eine Vorauswahl an zu speichernden Multimedia-Daten oder Präferenzen bzgl. von zu speichernden Inhalten gegenüber dem Controller angibt und somit nur ein Teil der gesamt vom Dienstanbieter übertragenen Multimedia-Daten auf dem Speichermedium gespeichert werden.

18. Multimedia-Abonnentensystem nach einem der vorherigen Ansprüche, **dadurch gekennzeichnet,** daß der Abonnent nur Zugriff auf Multimedia-Daten hat, die bereits vollständig auf dem Speichermedium gespeichert sind.

19. Multimedia-Abonnentensystem nach einem der vorherigen Ansprüche, **dadurch gekennzeichnet,** daß der Controller in einer Set-Top-Box angeordnet ist.

20. Multimedia-Abonnentensystem nach vorherigen Anspruch 18, **dadurch gekennzeichnet**, daß in der Set-Top-Box das Speichermedium angeordnet ist.

21. Multimedia-Abonnentensystem nach einem der Ansprüche 18 oder 19, **dadurch gekennzeichnet,** daß das zusätzliche Speichermedien an die Set-Top-Box zur Erweiterung der Speicherkapazität anschließbar sind.

22. Multimedia-Abonnentensystem nach einem der vorherigen Ansprüche, **dadurch gekennzeichnet,** daß die Set-Top-Box mindestens eine Schnittstelle zum Anschluß eines externen Fernsehers, einer Musikanlage, eines Videorecorders, einer Kabelanschlußbox, einer Satellitenempfangsanlage, einer Datenverarbeitungsanlage oder einer zusätzlichen gleichartigen Set-Top-Box hat.

23. Multimedia-Abonnentensystem nach einem der vorherigen Ansprüche, **dadurch gekennzeichnet,** daß die auf dem Speichermedium gespeicherten Daten über Datenleitungen von der Set-Top-Box an darin angeschlossene elektronische Geräte übertragbar sind.

24. Multimedia-Abonnentensystem nach einem der vorherigen Ansprüche, **dadurch gekennzeichnet,** daß ein Inhaltsverzeichnis bzgl. der auf dem Speichermedium gespeicherten oder in Zukunft abzuspeichernden Multimedia-Daten, Previews oder die Mulitmedia-Daten selbst mittels eines Fernsehers, einer Datenverarbeitungsanlage in Form z.B. eines Personal Computers oder eines direkt an die Set-Top-Box angeschlossenes Displays abspiel- oder anzeigbar sind.

25. Multimedia-Abonnentensystem nach einem der vorherigen Ansprüche, **dadurch gekennzeichnet,** daß der Abonnent nur für die Multimedia-Daten ein Entgelt an den Dienstanbieter entrichtet, die er vom Speichermedium zur Darstellung oder Weiterverarbeitung abruft und/oder auf einem externen Speichermedium zu seiner freien Verfügung abspeichert.

26. Multimedia-Abonnentensystem nach einem der vorherigen Ansprüche, **dadurch gekennzeichnet,** daß ein Bezahlungssystem vorgesehen ist, das dem Abonnenten nach Bezahlung für vom Abonnenten ausgewählte Multimedia-Daten Zugriff auf diese Multimedia-Daten gewährt.

27. Multimedia-Abonnentensystem nach Anspruch 25, **dadurch gekennzeichnet,** daß der Abonnent ein Guthaben oder Guthabenkonto hat, welches in der Set-Top-Box, auf einer Chipkarte oder beim Dienstanbieter gespeichert und/oder verwaltet wird, und bei Bedarf vom Abonnenten oder dem Dienstanbieter aufgefüllt werden kann, und daß die vom Abonnenten für dessen ausgesuchte Multimedia-Daten zu bezahlenden Beträge von diesem Guthaben abgezogen bzw. auf dem Guthabenkonto verbucht werden.

28. Multimedia-Abonnentensystem nach einem der vorherigen Ansprüche, **dadurch gekennzeichnet,** daß der Abonnent nur dann Entgelte für Multimedia-Daten entrichten muß, wenn er diese über einen Mindestprozentsatz hinaus betrachtet und/oder abhört.

29. Multimedia-Abonnentensystem nach einem der vorherigen Ansprüche, **dadurch gekennzeichnet,** daß der Controller oder die Set-Top-Box über Kommunikationsmittel verfügt, die sich des Übertragungsmediums für die Übertragung der Multimedia-Daten und/oder anderer zusätzlicher insbesondere bidirektionaler Übertragungsstrecken wie z.B. einer Telefonleitung bedient, wobei mittels des Kommunikationsmittels Daten zwischen dem Controller oder der Set-Top-Box und der EDV des Dienstanbieters austauschbar sind.

30. Multimedia-Abonnentensystem nach Anspruch 28, **dadurch gekennzeichnet,** daß mittels des Kommunikationsmittels Daten bzgl. der Bezahlung einzelner Multimedia-Daten, Abonnentenwünsche und/ oder -Präferenzen an den Dienstanbieter übertragbar sind.

31. Multimedia-Abonnentensystem nach einem der vorherigen Ansprüche, **dadurch gekennzeichnet,** daß der Abonnent bereits gespeicherte Multimedia-Daten markieren kann, so daß diese nicht von neuen Daten ersetzt oder überschrieben werden können, wobei der Abonnent von der Einrichtung automatisch aufgefordert wird markierte Daten zu de-markieren, damit neue Daten auf dem Speichermedium gespeichert werden können.

32. Multimedia-Abonnentensystem nach einem der vorherigen Ansprüche, **dadurch gekennzeichnet,** daß die einzelnen Mulitmedia-Daten vom Dienstanbieter mit einer Kennzeichnung versehen sind, und die Kennzeichnung die Höhe des zu zahlenden Entgeltes festlegt und/oder Aufschluß über die Art und/oder den Inhalt der gekennzeichneten Multimedia-Daten und/oder die Dauer der Speicherung auf dem Speichermedium gibt.

33. Multimedia-Abonnentensystem nach einem der vorherigen Ansprüche, **dadurch gekennzeichnet,** daß auf dem Speichermedium ein Speicherbereich zum langfristigen Speichern von Daten für den Abonnenten reserviert ist, in den der Abonnent nach Belieben Multimedia-Daten gegen Bezahlung oder kostenlos, übertragen kann, wobei dieser Speicherbereich nicht für das Speichern von vom Dienstanbieter neu übertragenen Multimedia-Daten zur Verfügung steht.

34. Multimedia-Abonnentensystem nach Anspruch 33, **dadurch gekennzeichnet,** daß der Abonnent die von ihm in den reservierten Speicherbereich übertragenen Multimedia-Daten kostenlos oder für ein geringeres Entgelt als das ursprünglich Entgelt abrufen kann.

35. Multimedia-Abonnentensystem nach einem der vorherigen Ansprüche, **dadurch gekennzeichnet,** daß der Abonnent unabhängig von der Art und Reihenfolge der auf dem Speichermedium gespeicherten Multimedia-Daten direkt auf bestimmte Daten zugreifen kann.
